# EUROPEAN PATENT SPECIFICATION

(11) **EP 4 227 051 B1**
(45) Date of publication and mention of the grant of the patent: **22.10.2025**
(21) Application number: 22888634.7
(22) Date of filing: 25.11.2022
(51) Int. Cl.: B05B 7/08, B28B 11/04, B41J 2/18, B05B 15/25, B05B 15/65, B05B 13/02, B05B 7/24, B05B 7/26, B05B 15/58, B41J 3/407, B05B 15/16, B05B 1/30

(54) **CERAMIC DIGITAL GLAZE SPRAYING DEVICE**
KERAMISCHE DIGITALE GLASURSPRÜHVORRICHTUNG
DISPOSITIF NUMÉRIQUE DE PULVÉRISATION DE GLAÇURE CÉRAMIQUE

(30) Priority: 30.11.2021 CN 202111449345
(43) Date of publication of application: 16.08.2023
(73) Proprietor: Foshan Hope Digital Printing Equipment Co., Ltd., Foshan City, Guangdong 528200 (CN)
(72) Inventor: DENG, Sheguang, Guangdong 528200 (CN)
(74) Representative: Wittmer, Maximilian
(86) International application number: PCT/CN2022/134251
(87) International publication number: WO 2023/098578

(56) References cited:
- WO-A1-2016/135545
- CN-A- 109 605 556
- CN-A- 112 776 149
- CN-U- 203 807 348
- CN-U- 205 905 557
- CN-U- 206 589 099
- CN-U- 212 554 350
- CN-U- 213 533 113
- IT-A1- 201700 067 828
- IT-A1- 202000 004 681
- JP-A- H0 977 576

## Description

### Technical field

The present application relates to the technical field of ceramic printing, in particular to a ceramic digital glaze-spraying device.

### Background

The application of glaze in ceramic glaze-spraying generally adopts two glaze methods: glaze-pouring and glaze-spraying. However, when the existing ceramic glaze-spraying device applies glaze in the two methods, the glaze-applying amount is manually controlled. Artificial control of the amount of glaze is inaccurate, which is easy to lead to a low glaze-applying amount for some ceramics and a high glaze-applying amount for some ceramics. Low glaze-applying amount will lead to an excessively thin glaze layer, which will not work, while high glaze-applying amount will lead to an excessively thick glaze layer and increase cost. Due to the fact that the thickness of the glaze layer is difficult to be ensured, the blank is prone to crack during firing, resulting in low quality of the printed product. In addition, the existing ceramic glaze-spraying device can only be used for full-format glaze-applying of ceramic tiles, and cannot realize the on-demand glaze-applying requirements of diversified glaze-spraying of 3D ceramic glaze-spraying.

WO 2016/135545 A1 discloses a printing device for ceramic tiles or slabs, which comprises a containment body having at least one operating face provided with a plurality of printing nozzles and a plurality of solenoid valves for the delivery of enamel, each solenoid valve being associated with an enamel tank and with a printing nozzle.

### Summary of the invention

In view of the above defects, the purpose of the present application is to propose a ceramic digital glaze-spraying device, which solves the problems that existing ceramic glaze-spraying devices are difficult to ensure the thickness of the glaze layer and cannot realize the on-demand glaze-spraying requirements of diversified glaze-spraying of 3D ceramic glaze-spraying.

In order to achieve this purpose, the present application adopts the following technical solutions: a ceramic digital glaze-spraying device, comprising a digital glaze-printing module and a glaze supply module, wherein the digital glaze-printing module is communicated with the glaze supply module;
the digital glaze-printing module comprises a long-strip glaze pipe, a quick-connect pipe assembly, and a plurality of glaze-spraying spay-head assemblies, the long-strip glaze pipe is provided with a glaze inlet and a glaze-printing port, the glaze inlet is communicated with the glaze-printing port through a glaze cavity arranged in the long-strip glaze pipe, the glaze-printing port of the long-strip glaze pipe is communicated with each of the glaze-spraying spray-head assemblies one by one through the quick-connect pipe assembly to form a plurality of mutually independent glaze spraying paths;
the glaze-spraying spray-head assembly comprises a valve spray-head unit and a valve nozzle, an input end of the valve spray-head unit is connected to the quick-connect pipe assembly, and an output end of the valve spray-head unit is connected to the valve nozzle, and the valve spray-head unit is configured to control the on-off of the glaze-spraying path corresponding to the glaze-spraying spray-head assembly;
the glaze supply module comprises a glaze barrel, a glaze supply pump, a glaze box assembly, an air compressor and a pressure regulating valve, and the glaze box assembly comprises a first glaze box;
the glaze barrel is communicated with a glaze input port of the first glaze box through the glaze supply pump, and a glaze output port of the first glaze box is communicated with the glaze cavity arranged in the long-strip glaze pipe through the glaze inlet, and the glaze barrel, the glaze supply pump, the first glaze box and the glaze inlet of the long-strip glaze pipe are sequentially connected to form a glaze supply path;
the air compressor, the pressure regulating valve and a positive pressure air inlet of the first glaze box are sequentially communicated.

In an embodiment, the long-strip glaze pipe is further provided with a glaze outlet, the glaze outlet is communicated with the glaze inlet through the glaze cavity arranged in the long-strip glaze pipe; the glaze supply module further comprises a circulating pump, and the glaze box assembly further comprises a second glaze box;
the glaze outlet of the long-strip glaze pipe is communicated with a glaze input port of the second glaze box, a glaze output port of the second glaze box is communicated with an input port of the circulating pump, and an output port of the circulating pump is communicated with the glaze input port of the first glaze box;
the glaze outlet of the long-strip glaze pipe, the second glaze box, the circulating pump and the glaze input port of the first glaze box are sequentially connected to form a large circulation glaze path.

Optionally, the glaze supply module further comprises a filter, an input port of the filter is respectively connected to the output port of the glaze supply pump and the output port of the circulating pump, and an output port of the filter is connected to the glaze input port of the first glaze box.

Optionally, the glaze supply module further comprises a buffer tank, and the air compressor, the buffer tank, the pressure regulating valve and the positive pressure air inlet of the first glaze box are sequentially connected to form a gas path.

In another embodiment, the long-strip glaze pipe is further provided with a glaze outlet, the glaze outlet is communicated with the glaze inlet through the glaze cavity arranged in the long-strip glaze pipe;
the glaze supply module further comprises a circulating pump,
the glaze outlet of the long-strip glaze pipe is communicated with an input port of the circulating pump, and an output port of the circulating pump is communicated with the glaze input port of the first glaze box;
the glaze outlet of the long-strip glaze pipe, the circulating pump, and the glaze input port of the first glaze box are sequentially connected to form a large circulation glaze path.

Optionally, the glaze supply module further comprises a filter,
an input port of the filter is connected to the glaze output port of the first glaze box, and an output port of the filter is connected to the input port of the circulating pump;
the glaze output port of the first glaze box, the long-strip glaze pipe, and the glaze input port of the circulating pump are sequentially connected to form a branch of the large circulation glaze path. Optionally, the glaze supply module is arranged above the digital glaze-printing module;
the glaze inlet and the glaze outlet are respectively arranged at both ends of the long-strip glaze pipe;
the glaze-printing port is formed on the lower surface of the long-strip glaze pipe, and the glaze-spraying spray-head assembly is arranged under the long-strip glaze pipe.

Optionally, the quick-connect pipe assembly comprises a plurality of upper quick-connect pipes, a plurality of lower quick-connect pipes and a plurality of connecting pipelines, the upper quick-connect pipe and the lower quick-connect pipe are in one-to-one correspondence, and the upper quick-connect pipe is communicated with the corresponding lower quick-connect pipe through the corresponding connecting pipeline;
the long-strip glaze pipe is provided with a plurality of glaze-printing ports, the glaze-printing port and the upper quick-connect pipe are in one-to-one correspondence, and the upper quick-connect pipe is connected to the corresponding glaze-printing port;
the valve spray-head unit and the lower quick-connect pipes are in one-to-one correspondence, and the lower quick-connect pipe is connected to the corresponding valve spray-head unit.

Optionally, the digital glaze-printing module further comprises a spray-head mounting assembly, a first mounting rack, and a second mounting rack, the spray-head mounting assembly comprises a mounting plate, wherein the first and second mounting racks are both arranged perpendicular to the mounting plate, and the lower end of the first mounting rack is connected to the left end of the upper surface of the mounting plate, the lower end of the second mounting rack is connected to the right end of the upper surface of the mounting plate, the left end of the long-strip glaze pipe is connected to the upper end of the first mounting rack, and the right end of the long-strip glaze pipe is connected to the upper end of the first mounting rack;
the mounting plate, the first mounting rack, the second mounting rack, and the long-strip glaze pipe enclose a mounting inner cavity, and the glaze-spraying spray-head assemblies are arranged in the mounting inner cavity.

Optionally, the spray-head mounting assembly further comprises a mounting base and an adjustment mounting part, the glaze-spraying spray-head assembly pass through the upper surface of the mounting base in a direction from the upper surface of the mounting base to the lower surface of the mounting base, and the glaze-spraying spray-head assembly is fixed to the mounting base, and the mounting base is fixed to the mounting plate through the adjustment mounting part.

Optionally, the glaze-spraying spray-head assembly further comprises a protruding ring fixed to the outer wall of the valve spray-head unit, and the protruding ring is located on the upper surface of the mounting base after the glaze-spraying spray-head assembly passing through the mounting base;
the spray-head mounting assembly further comprises a pressing block, the pressing block is provided with a spray-head passing-through hole, the radius of the spray-head passing-through hole is greater than the radius of the valve spray-head unit, and the radius of the spray-head passing-through hole is smaller than the outer diameter of the protruding ring;
the pressing block fixes the outer wall of the valve spray-head unit through the spray-head passing-through hole, and the pressing block presses the protruding ring onto the upper surface of the mounting base through a screw.

Optionally, the spray-head mounting assembly further comprises a positioning ring, the outer diameter of the positioning ring is greater than the radius of the spray-head passing-through hole;
the positioning ring is sleeved on the outer wall of the valve spray-head unit, and the positioning ring is pressed against the upper surface of the pressing block.

Optionally, a stirring device is provided in the first glaze box, the stirring device comprises a stirring motor, a rotary seal bearing, a liquid level gauge, a stirring shaft and a stirring blade;
the stirring motor is fixed to the rotary seal bearing, the rotary seal bearing is installed on the top of the first glaze box, and the stirring motor is connected to the stirring shaft and the stirring blade.

Optionally, the stirring device comprises a stirring motor, a rotary seal bearing, a liquid level gauge, a stirring shaft and a stirring blade. The stirring motor is fixed to the rotary seal bearing, the rotary seal bearing is installed on the top of the first glaze box, and the stirring motor is connected to the stirring shaft and the stirring blade; the amount of the glaze in the first glaze box is monitored by the liquid level gauge in real time, so that the glaze is supplemented in real time. Under the driving of the stirring motor and the level control of the liquid level gauge, the new glaze and the old glaze are constantly stirred in the stirring barrel, so that the tiny difference between the new glaze and old glaze can be reduced, and glaze precipitation is effectively prevented.

Optionally, the filter is a cylindrical stainless steel filter, an input port of the cylindrical stainless steel filter is connected to the output port of the first glaze box, and an output port of the cylindrical stainless steel filter is connected to the glaze input port of the circulating pump.

Optionally, the internal filter screen of the cylindrical stainless steel filter is a detachable stainless steel filter screen. Compared with a traditional filter, the cylindrical stainless steel filter has main advantages that the stainless steel filter screen can be quickly disassembled, reused, other precision filter screens can be replaced as required, and the cost is effectively reduced. Based on the characteristics that the cylindrical stainless steel filter can replace filter screens with other precision as required, a set of filtering systems with different filtering precision can be configured in series according to the characteristics of particle size, viscosity, surface tension and the like of the glaze, and an optimal filtering effect can be obtained. The material of the cylindrical stainless steel filter is not limited to stainless steel, and can be replaced with other materials that do not react with the glaze.

The ceramic digital glaze-praying device provided in the present application has the following beneficial effects: in the ceramic digital glaze-spraying device, the glaze for ceramic glaze-spraying is provided to the digital glaze-printing module through the glaze supply path, and then the air pressure is adjusted through the air compressor and the pressure regulating valve, so that the spraying amount of the glaze in unit time can be controlled. In addition, the on-off of the glaze-spraying path is controlled by controlling the opening and closing of the valve spray-head unit to control the size of glaze droplets, thereby accurately controlling the thickness of the glaze layer during ceramic printing to avoid the glaze layer being too thin or too thick, thereby improving the quality of the printed product, and the digital on-demand printing can be also realized, therefore meeting the diverse glaze-spraying requirements of 3D ceramic glaze-spraying.

### Brief description of the drawings

- FIG. 1: is a partial structural schematic diagram of a ceramic digital glaze-spraying device according to an embodiment of the present application;
- FIG. 2: is a schematic diagram of the glaze path of a ceramic digital glaze-spraying device according to an embodiment of the present application;
- FIG. 3: is a partial structural schematic diagram of a digital glaze-printing module according to an embodiment of the present application;
- FIG. 4: is a structural schematic diagram of a spray-head mounting assembly and a spray-head mounting assembly according to an embodiment of the present application;
- FIG. 5: is an enlarged schematic diagram of circle A in FIG. 4;
- FIG. 6: is a structural schematic diagram of a glaze-spraying spray-head assembly according to an embodiment of the present application;

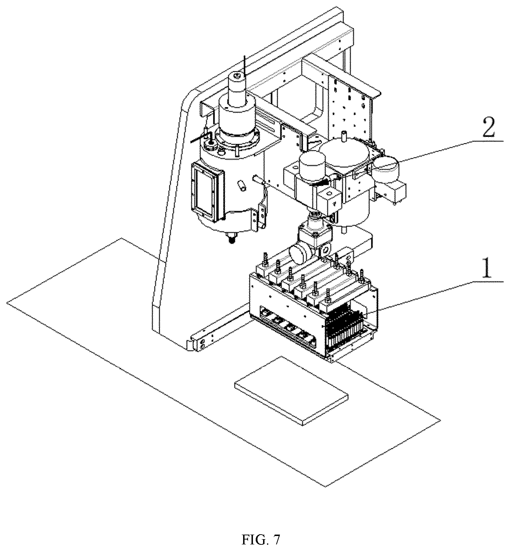

- FIG. 7: is a partial structural schematic diagram of a ceramic digital glaze-spraying device according to another embodiment of the present application;
- FIG. 8: is a schematic diagram of the glaze path of a ceramic digital glaze-spraying device according to another embodiment of the present application;
- FIG. 9: is a structural schematic diagram of the first glaze box of the present application;

### Detailed description

Embodiments of the present application are described in detail below, and examples of which are shown in the drawings, wherein the same or similar reference numerals represent the same or similar elements or element having the same or similar functions throughout. The embodiments described below with reference to the accompanying drawing are illustrative and are only used to explain the present application, but should not be construed as limiting the present application.

In the description of the present application, it should be understand that the terms "longitudinal", "transverse", "upper", "lower", "front", "rear", "left", "right", "vertical", "horizontal", "top", "bottom", "in", "outside", and other indications of orientation or positional relationships are based on the orientation or positional relationships shown in the drawings, and are only for convenience of describing the present application and simplifying the description. It does not indicate or imply that the device or element referred to must have a specific orientation, or be constructed and operated in a specific orientation, and therefore should not be constructed as limiting the present application. In addition, a feature defined with "first" or "second" may explicitly or implicitly comprising one or more of the feature, and they are used for distinguishing between descriptive features without distinction about order or importance.

In the description of the present application, unless otherwise specified, "plurality" means two or more.

In the description of the present application, it should be noted that, unless otherwise clearly stipulated and limited, the terms "installation" and "connection" should be understood in a broad sense, for example, it can be a fixed connection or a detachable connection, or an integrated connection; it can be a mechanical connection or an electrical connection; it can be a direct connection, or an indirect connection through an intermediary, or it can be an internal communication of two elements. Those of ordinary skilled in the art can understand the specific meanings of the above terms in the present application in specific situations.

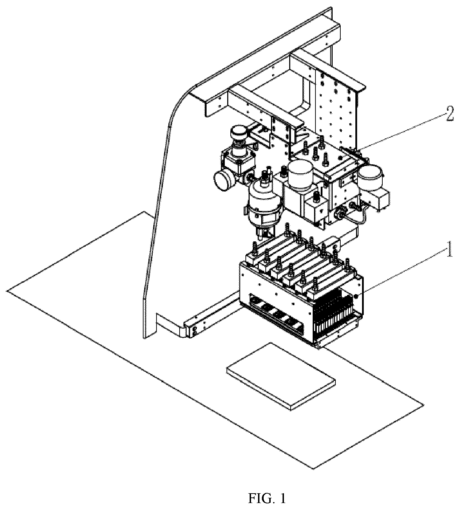

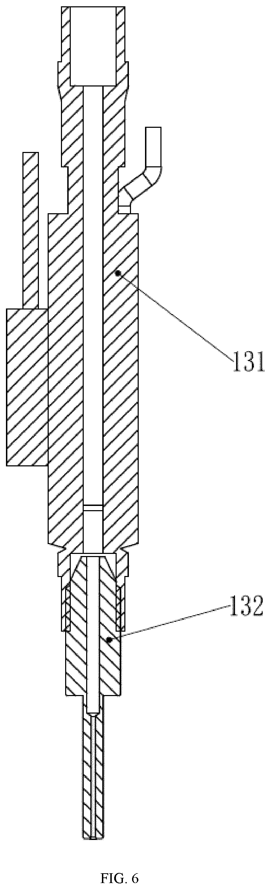

In conjunction with FIGS. 1 to 6 below, a ceramic digital glaze-spraying device according to an embodiment of the present application is described. The ceramic digital glaze-spraying device comprises a digital glaze-printing module 1 and a glaze supply module 2, and the digital glaze-printing module 1 is communicated with the glaze supply module 2. The digital glaze-printing module 1 comprises a long-strip glaze pipe 11, a quick-connect tube assembly 12 and glaze-spraying spray-head assemblies 13. The long-strip glaze pipe 11 is provided with a glaze inlet 111 and a glaze-printing port 112, and there is a plurality of the glaze-spraying spray-head assemblies 13, so that it can be spliced and widened according to printing width requirements. The glaze inlet 111 is communicated with the glaze-printing port 112 through a glaze cavity arranged in the long-strip glaze pipe 11, the glaze-printing port 112 of the long-strip glaze pipe 11 is communicated with each of the glaze-spraying spray-head assembly 13 one-to-one through the quick-connect tube assembly 12 to form a plurality of mutually independent glaze-spraying paths; the glaze-spraying spray-head assembly 13 comprises a valve spray-head unit 131 and a valve nozzle 132, an input end of the valve spray-head unit 131 is connected to the quick-connect pipe assembly 12, and an output end of the valve spray-head unit 131 is connected to the valve nozzle 132, and the valve spray-head unit 131 is configured to control the on-off of the glaze-spraying path corresponding to the glaze-spraying spray-head assembly 13. The glaze supply module 2 comprises a glaze barrel 21, a glaze supply pump 22, a glaze box assembly 23, an air compressor 24 and a pressure regulating valve 25, and the glaze box assembly 23 comprises a first glaze box 231; the glaze barrel 21 is communicated with a glaze input port of the first glaze box 231 through the glaze supply pump 22, and a glaze output port of the first glaze box 231 is communicated with the glaze cavity arranged in the long-strip glaze pipe 11 through the glaze inlet 111, and the glaze barrel 21, the glaze supply pump 22, the first glaze box 231 and the glaze inlet 111 of the long-strip glaze pipe 11 are sequentially connected to form a glaze supply path; the air compressor 24, the pressure regulating valve 25 and a positive pressure air inlet of the first glaze box 231 are sequentially communicated.

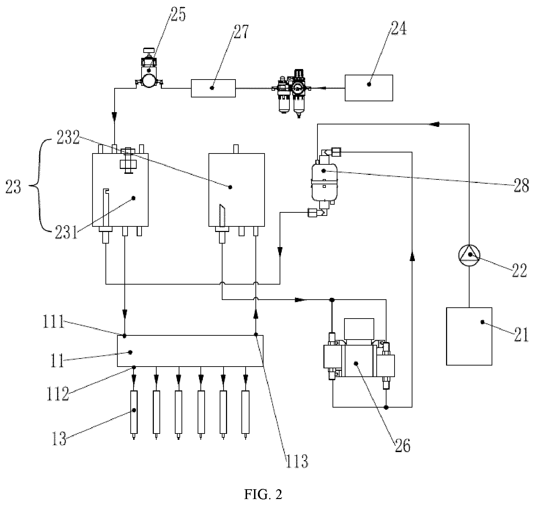

In the ceramic digital glaze-spraying device, the glaze for ceramic glaze-spraying is provided to the digital glaze-printing module 1 through the glaze supply path, and then the air pressure is adjusted through the air compressor 24 and the pressure regulating valve 25, so that the spraying amount of the glaze in unit time can be controlled. In addition, the on-off of the glaze-spraying path is controlled by controlling the opening and closing of the valve spray-head unit 131 to control the size of glaze droplets, thereby accurately controlling the thickness of the glaze layer during ceramic printing to avoid the glaze layer being too thin or too thick, thereby improving the quality of the printed product, and the digital on-demand printing can be also realized, therefore meeting the diverse glaze-spraying requirements of 3D ceramic glaze-spraying. As shown in FIG. 2, when glaze spraying and printing are needed, glaze in the glaze barrel 21 is pumped to the glaze input port of the first glaze box 231 through the glaze supply pump 22, and then the glaze enters the first glaze box 231 through the glaze input port of the first glaze box 231. Meanwhile, the air compressor 24 works, and because the pressure regulating valve 25 is communicated with the positive pressure air inlet of the first glaze box 231, the gas pressure of the compressed air blown into the first glaze box 231 can be controlled by adjusting the pressure adjusting valve 25. After the compressed air is blown into the first glaze box 231, the compressed air can drive the glaze to enter the glaze cavity arranged in the long-strip glaze pipe 11 from the glaze inlet 111, and the kinetic energy of the glaze is improved. After the glaze entering the glaze cavity arranged in the long-strip glaze pipe 11, the valve spray-head unit 131 is controlled to be opened, the glaze flows from the glaze-printing port 112 into the quick-connect pipe assembly 12, then flows into the valve spray-head unit 131 through the quick-connect pipe assembly 12, and finally the glaze is sprayed to a designated position of the ceramic surface through the valve nozzle 132. When the position does not need to be sprayed glaze for printing, the valve spray-head unit 131 is controlled to be closed, and the glaze cannot flow to the valve nozzle 132, thereby stopping spraying the glaze.

Specifically, the glaze barrel 21 is internally equipped with a stirring mechanism and a liquid level gauge, so that the precipitation of the glaze can be effectively prevented, and the liquid level of the glaze can be monitored in real time. The long-strip glaze pipe 11 is equivalent to a storage tank and a buffer tank of the glaze, the first glaze box 231 serves as the front end of the long-strip glaze pipe 11, and the function of the first glaze box 231 is to store and provide stable glaze and provide stable positive pressure. The valve spray-head unit 131 is a high-speed two-way solenoid valve, and each valve switch voltage is independently and accurately controlled by means of the software system, so that the fluid passing through the valve can be controlled, and a glaze point can be formed on the ceramic by spraying the glaze passed through the valve, through the valve nozzle 132 with a small inner diameter under the condition of high pressure. By accurately controlling each glaze droplet, on-demand printing can be achieved, and the utilization rate of glaze is almost 100%. The digital glaze-printing module 1 and the glaze supply module 2 can be fixedly connected or can be formed independently into a new device, and then are connected with an original machine. After the ceramic is conveyed to the designated location through the conveyor belt, the printing signal is automatically triggered, and the digital glaze-printing module 1 may print on the ceramic as needed, no excess waste is generated, refined production is achieved, and the utilization rate of the glaze is almost 100%.

As an embodiment, as shown in FIG. 2, the long-strip glaze pipe 11 is further provided with a glaze outlet 113, the glaze outlet 113 is communicated with the glaze inlet 111 through the glaze cavity arranged in the long-strip glaze pipe 11. The glaze supply module 2 further comprises a circulating pump 26, and the glaze box assembly 23 further comprises a second glaze box 232; the glaze outlet 113 of the long-strip glaze pipe 11 is communicated with a glaze input port of the second glaze box 232, a glaze output port of the second glaze box 232 is communicated with an input port of the circulating pump 26, and an output port of the circulating pump 26 is communicated with the glaze input port of the first glaze box 231; the glaze outlet 113 of the long-strip glaze pipe 11, the second glaze box 232, the circulating pump 26 and the glaze input port of the first glaze box 231 are sequentially connected to form a large circulation glaze path. When the valve spray-head unit 131 is opened and the glaze is ejected from the valve nozzle 132, since the opening of the valve spray-head 132 is small, most of the glaze is retained in the glaze cavity arranged in the long-strip glaze pipe 11, at this time, the glaze flows into the second glaze box 232 from the glaze outlet 113 through the large circulation glaze path, and then flows from the output port of the second glaze box 232 into the circulating pump 26, and the glaze is pumped back into the first glaze box 231 through the circulating pump 26 to form a cycle. In this process, the glaze strip re-entering the first glaze box 231 has positive pressure and is combined with the newly added glaze to ensure that the glaze has sufficient energy to flow from the glaze output port of the first glaze box 231 to the long-strip glaze pipe 11, then flows into the glaze-spraying spray-head assembly 13, and is finally ejected from the valve spray-head 132. The size of the glaze droplet printed on the ceramic surface can be controlled by controlling the size of the positive pressure that the glaze returned to the first glaze box 231 in the large circulation glaze path, the opening and closing frequency of the valve spray-head unit 131 and the selection of a suitable diameter of the valve spray-head unit 131 and the inner diameter of the valve spray-head 132, so that the thickness of the glaze layer is controlled.

In addition, under the action of the positive pressure of the first glaze box 231, a part of the glaze flows back to the second glaze box 232, a large circulation glaze path is provided, and a circulating pipeline is formed in the first glaze box 231, the long-strip glaze pipe 11 and the second glaze box 232, so that the glaze can effectively move and circulate. The circulating pump 26 connects the second glaze box 232 and the first glaze box 231, and conveys the glaze of the second glaze box 232 back into the first glaze box 231 through the pipeline according to the pressure of the circulating pump 26, so that the glaze can be circulated to prevent precipitation.

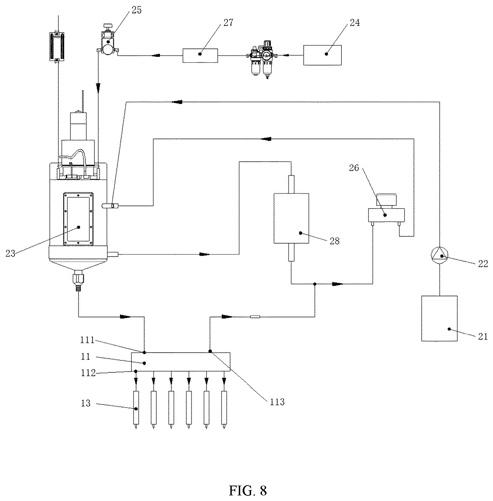

As another embodiment, as shown in FIG. 8, the long-strip glaze pipe 11 is further provided with a glaze outlet 113, the glaze outlet 113 is communicated with the glaze inlet 111 through the glaze cavity arranged in the long-strip glaze pipe 11; the glaze supply module 2 further comprises a circulating pump 26, and the glaze box assembly 23 further comprises a filter 28; the glaze outlet 113 of the long-strip glaze pipe 11 is communicated with the glaze input port of the circulating pump 26, the circulating glaze output port of the first glaze box 231 is communicated with the input port of the filter 28, the glaze output port of the filter 28 is communicated with the input port of the circulating pump 26, and the output port of the circulating pump 26 is communicated with the glaze input port of the first glaze box 231; the glaze outlet of the first glaze box 231, the filter 28, the circulating pump 26 and the glaze input port of the first glaze box 231 are sequentially connected to form a large circulation glaze path. The glaze outlet of the first glaze box 231, the long-strip glaze pipe 11 and the glaze input port of the circulating pump 26 are sequentially connected to form a branch of the large circulation glaze path. The glaze stirring device 232 is arranged in the first glaze box 231, and the glaze is continuously rotated in the first glaze box to prevent glaze from precipitating. When the valve spray-head unit 131 is opened and the glaze is ejected from the valve nozzle 132, since the opening of the valve nozzle 132 is small, most of the glaze is retained in the glaze cavity arranged in the long-strip glaze pipe 11, at this time, the glaze flows into the circulating pump 26 from the glaze outlet 113 through the branch of the large circulation glaze path, and the glaze is pumped back into the first glaze box 231 through the circulating pump 26 to form a cycle. In the process, the glaze re-entering the first glaze box 231 has positive pressure and is combined with the newly added glaze to ensure that the glaze has sufficient energy to flow from the glaze output port of the first glaze box 231 to the long-strip glaze pipe 11, then flows into the glaze-spraying spray-head assembly 13, and is finally ejected from the valve nozzle 132. The size of the glaze droplet printed on the ceramic surface can be controlled by the size of the positive pressure that the glaze returned to the first glaze box 231 in the large circulation glaze path, the opening and closing frequency of the valve spray-head unit 131 and the selection of a suitable diameter of the valve spray-head unit 131 and the inner diameter of the valve nozzle 132, so that the thickness of the glaze layer is controlled.

Under the action of the positive pressure of the first glaze box 231, a part of the glaze flows back to the inlet of the circulating pump 26, and then is pumped back to the first glaze box 231 to form the branch of the large circulation glaze path, and a circulating pipeline is formed in the first glaze box 231, the long-strip glaze pipe 11 and the circulating pump 26, so that the glaze can effectively move and circulate. In addition, most of the glaze flows through the filter 28 under positive pressure, and the glaze of the branch is collected at the inlet of the circulating pump 26. The circulating pump 26 connects the filter 28 with the glaze outlet 113 and the first glaze box 231, and the glaze of the filter 28 and the glaze outlet 113 is conveyed back into the first glaze box 231 through the pipeline according to the pressure of the circulating pump 26, so that the glaze can be circulated to prevent precipitation.

Optionally, the diameter of the valve spray-head unit 131 is 0.4mm to 0.6mm, the inner diameter of the valve nozzle 132 is 0.2mm to 0.5mm, the opening and closing frequency of the valve spray-head unit 131 is less than or equal to 2000Hz, the positive pressure range of the glaze returning to the first glaze box 231 is 0.01Mpa to 0.6Mpa, and the size of the glaze is less than 5µm, the viscosity of the glaze (25°C) is less than 80 Pa·s. The valve nozzle 132 ejects an independent glaze droplet when the opening and closing frequency of the valve spray-head unit 131 is high; the valve nozzle 132 ejects a continuous straight line when the valve spray-head unit 131 is normally open.

Optionally, the glaze-spraying spray-head assembly 13 is a single-color spray-head, the longitudinal printing resolution thereof is less than or equal to 60DPI, the frequency is 1kHz, the maximum printing speed is 24m/min, and the transverse printing resolution is 60DPI.

Optionally, the glaze spraying spray-head assembly 13 is a two-color spray-head, the longitudinal printing resolution thereof is less than or equal to 30 DPI, the frequency is 1 kHz, the maximum printing speed is 24 m/min, and the transverse printing resolution is 60 DPI.

Optionally, the glaze supply module 2 further comprises a filter 28, an input port of the filter 28 is respectively connected to the output port of the glaze supply pump 22 and the output port of the circulating pump 26, and an output port of the filter 28 is connected to the glaze input port of the first glaze box 231. The filter 28 is configured to filter impurities in the glaze, thereby avoiding blockage of the pipeline due to the presence of impurities. The glaze from the glaze supply path and the large circulation glaze path are all introduced into the same filter 28, which can reduce the number of filters 28 used, thereby reducing the cost.

As another embodiment, the filter 28 is a cylindrical stainless steel filter, the input port of the cylindrical stainless steel filter is connected to the output port of the first glaze box, and the output port of the cylindrical stainless steel filter is connected to the glaze input port of the circulating pump. The stainless steel columnar filter 28 is configured to filter impurities in the glaze, thereby avoiding blockage of the pipeline due to the presence of impurities.

Optionally, the glaze supply module 2 further comprises a buffer tank 27, and the air compressor 24, the buffer tank 27, the pressure regulating valve 25 and the positive pressure air inlet of the first glaze box 231 are sequentially connected to form a gas path. The buffer tank 27 has a buffering effect on the compressed air from the air compressor 24 to prevent the compressed air from directly blowing to the pressure regulating valve 25 to damage the pressure regulating valve 25. Specifically, the gas path further comprises a pressure detection element for detecting the air pressure of the compressed air.

Specifically, as shown in FIG. 1, the glaze supply module 2 is arranged above the digital glaze-printing module 1; in this way, due to the gravity effect, the glaze is easier to flow into the glaze cavity arranged in the long-strip glaze pipe 11 from the glaze output port of the first glaze box 231 through the glaze inlet 111 of the long-strip glaze pipe 11. The glaze inlet 111 and the glaze outlet 113 are respectively arranged at both ends of the long-strip glaze pipe 11; in this way, when the glaze passes through the large circulation glaze path, the glaze can pass through the long-strip glaze pipe 11 from start to finish, so that the path of the large circulation glaze path can cover all the glaze-printing port 112, which is conducive to the glaze to enter the quick-connect pipe assembly 12 from the glaze-printing port 112. The glaze-printing port 112 is formed on the lower surface of the long-strip glaze pipe 11, and the glaze-spraying spray-head assembly 13 is arranged under the long-strip glaze pipe 11. In this way, due to the gravity effect, the glaze is easier to flow into the quick-connect pipe assembly 12 from the glaze-printing port 112. Optionally, the glaze inlet 111 and the glaze outlet 113 are respectively formed at the left and right ends of the upper surface of the long-strip glaze pipe 11. In combination with the glaze-printing ports 112 formed on the lower surface of the long-strip glaze pipe 11, the energy of the glaze can be improved more easily through the gravity acceleration, so that the glaze is more easily ejected from the valve nozzle 132.

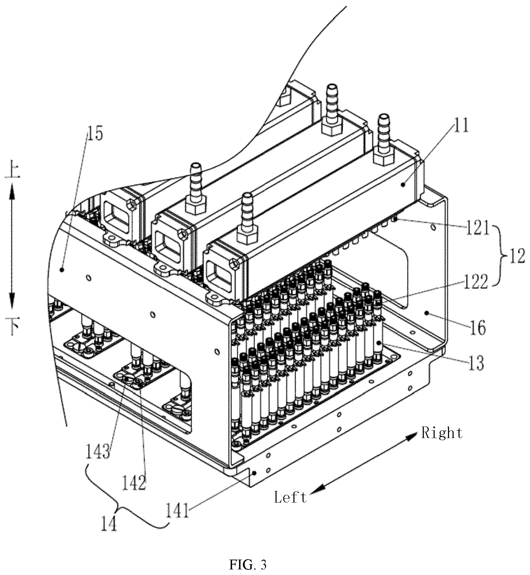

Optionally, as shown in FIG. 3, the quick-connect pipe assembly 12 comprises a plurality of upper quick-connect pipes 121, a plurality of lower quick-connect pipes 122 and a plurality of connecting pipelines. The upper quick connect pipe 121 and the lower quick connect pipe 122 are in one-to-one correspondence, and the upper quick-connect pipe 121 is communicated with the corresponding lower quick-connect pipe 122 through the corresponding connecting pipeline; the long-strip glaze pipe 11 is provided with a plurality of glaze-printing ports 112, the glaze-printing port 112 and the upper quick-connect pipes 121 are in one-to-one correspondence, and the upper quick-connect pipe 121 is connected to the corresponding glaze-printing port 112; the valve spray-head unit 131 and the lower quick-connect spray-head 122 are in one-to-one correspondence, and the lower quick-connect spray-head 122 is connected to the corresponding valve spray-head unit 131. By providing the upper quick-connect pipe 121, the lower quick-connect pipe 122 and the connecting pipes, the convenience of installation can be improved. During installation, one end of the upper quick-connect pipe 121 is installed on the glaze-printing port 112, one end of the lower quick-connect pipe 122 is installed on the valve spray-head unit 131, and then the other end of the upper quick-connect pipe 121 and the other end of the lower quick-connect pipe 122 are connected through the corresponding connecting pipeline. By providing the glaze-printing ports 112, and the valve spray-head unit 131 and the valve spray-head 132 which are in one-to-one correspondence with the printing glaze ports 112, different patterns can be formed by controlling the opening and closing of different valve spray-head units 131 during spraying glaze. Optionally, the connecting pipe is a hose, so that it is easier to install when connecting the other end of the upper quick-connect pipe 121 with the other end of the lower quick-connect pipe 122.

As an embodiment, as shown in FIG. 3, the digital glaze-printing module 1 further comprises a spray-head mounting assembly 14, a first mounting rack 15 and a second mounting rack 16. The spray-head mounting assembly 14 comprises a mounting plate 141, wherein the first mounting rack 15 and the second mounting rack 16 are both arranged perpendicular to the mounting plate 141, and the lower end of the first mounting rack 15 is connected to the left end of the upper surface of the mounting plate 141, the lower end of the second mounting rack 16 is connected to the right end of the upper surface of the mounting plate 141, the left end of the long-strip glaze pipe 11 is connected to the upper end of the first mounting rack 15, and the right end of the long-strip glaze pipe 11 is connected to the upper end of the first mounting rack 15; the mounting plate 141, the first mounting rack 15, the second mounting rack 16 and the long-strip glaze pipe 11 enclose a mounting cavity, and the glaze-spraying spray-head assembly 13 are arranged in the mounting cavity. In this way, the long-strip glaze pipe 11 can be erected above the glaze-spraying head assembly 13, so that the glaze-printing port 112 of the long-strip glaze pipe 11 is located above the valve spray-head unit 131. Due to the gravity effect, it is conducive to the glaze to flow into the valve spray-head unit 131. In addition, since the long-strip glaze pipe 11 is respectively connected to the upper end of the first mounting rack 15 and the upper end of the second mounting rack 16, the top of the mounting inner cavity is formed, and another top does not need to be provided, thereby saving materials and reducing costs. Due to the fact that the glaze-spraying spray-head assembly 13 is arranged in the mounting inner cavity, the mounting plate 141, the first mounting rack 15, the second mounting rack 16 and the long-strip glaze pipe 11 also play a role in protecting the glaze-spraying spray-head assembly 13.

As an embodiment, as shown in FIG. 3, the spray-head mounting assembly 14 further comprises a mounting base 142 and an adjustment mounting part 143, the glaze-spraying spray-head assembly 13 passes through the upper surface of the mounting base 142 in a direction from the upper surface of the mounting base 142 to the lower surface of the mounting base 142, and the glaze-spraying spray-head assembly 13 is fixed to the mounting base 142, and the mounting base 142 is fixed to the mounting plate 141 through the adjustment mounting part 143. In this way, the valve nozzle 132 can be aligned with the ceramic when the ceramic is delivered below the ceramic digital glaze-spraying device. After the adjustment mounting part 143 is loosened, the position of the mounting base 142 on the mounting plate 141 can be finely adjusted, so that the position of the spray-head mounting assembly 14 can be finely adjusted. The position of the mounting base 142 in the direction perpendicular to the printing direction can be adjusted by adjusting the mounting part 143, so that the distance between each set of valve spray-head units 131 meets the assembly requirement.

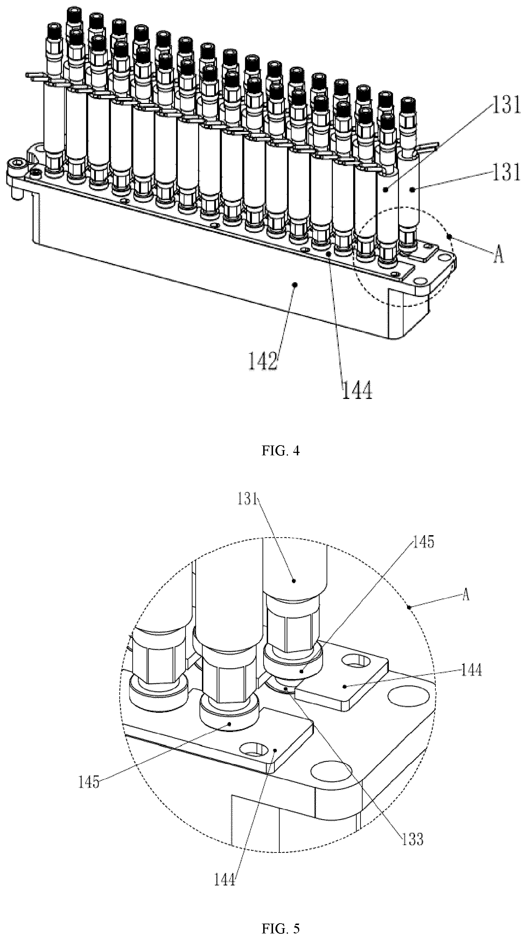

Optionally, as shown in FIGS. 4 and 5, the glaze-spraying spray-head assembly 13 further comprises a protruding ring 133 fixed to the outer wall of the valve spray-head unit 131, and the protruding ring 133 is located on the upper surface of the mounting base 142 after the glaze-spraying spray-head assembly 13 passing through the mounting base 142; the spray-head mounting assembly 14 further comprises a pressing block 144, the pressing block 144 is provided with a spray-head passing-through hole, the radius of the spray-head passing-through hole is greater than the radius of the valve spray-head unit 131, and the radius of the spray-head passing-through hole is smaller than the outer diameter of the protruding ring 133; the pressing block 144 fixes the outer wall of the valve spray-head unit 131 through the spray-head passing-through hole, and the pressing block 144 presses the protruding ring 133 against the upper surface of the mounting base 142 through a screw. In this way, the lower surface of the pressing block 144 is tightly attached to the protruding ring 133, so that the protruding ring 133 is pressed against the upper surface of the mounting base 142. Since the protruding ring 133 is fixed to the outer wall of the valve spray-head unit 131, the pressing block 144 can press the valve spray-head unit 131 against the upper surface of the mounting base 142 through the protruding ring 133, thereby preventing the valve spray-head unit 131 from moving upward relative to the mounting base 142 to disengage from the mounting base 142. Optionally, the pressing block 144 is provided with a plurality of spray-head passing-through holes, the spray-head passing-through hole and the valve spray-head unit 131 are in one-to-one correspondence, so that all the valve spray-head units 131 in the same row are pressed against the same horizontal plane.

Optionally, as shown in FIG. 5, the spray-head mounting assembly 14 further comprises a positioning ring 145, the outer diameter of the positioning ring 145 is greater than the radius of the spray-head passing-through the hole; the positioning ring 145 is sleeved on the outer wall of the valve spray-head unit 131, and the positioning ring 145 is pressed against the upper surface of the pressing block 144. The valve spray-head unit 131 is pressed against the upper surface of the pressing block 144 by the positioning ring 145, thereby preventing the valve spray-head unit 131 from moving downward relative to the mounting base 142 and disengaging from the mounting base 142.

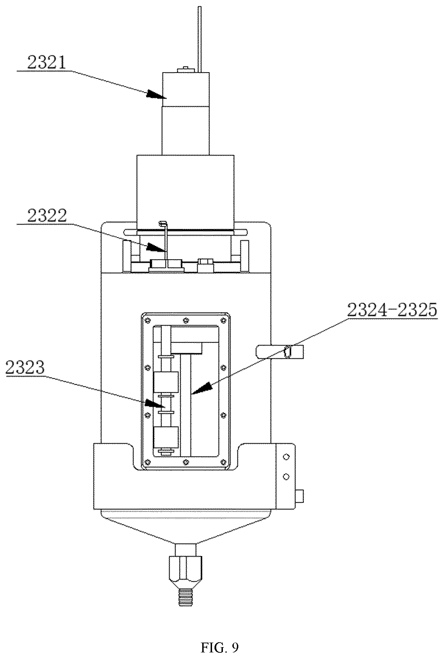

As an embodiment shown in FIG. 9, a stirring device is provided in the first glaze box. In some embodiments, the stirring device comprises a stirring motor 2321, a rotary seal bearing 2322, a liquid level gauge 2323, a stirring shaft 2324 and a stirring blade 2325. The stirring motor 2321 is fixed to the rotary seal bearing 2322, the rotary seal bearing 2322 is installed on the top of the first glaze box, and the stirring motor 2321 is connected to the stirring shaft 2324 and the stirring blade 2325. The content of glaze in the first glaze box is monitored by the liquid level gauge 2323 in real time to realize real-time replenishment of glaze. The new glaze and the old glaze are continuously stirred in the stirring barrel under the driving of the stirring motor 2321 and the liquid level control of the liquid level gauge 2323, so that the tiny difference between the new and old glaze may be reduced, and the glaze precipitation is effectively prevented.

Other configurations and operations of the ceramic digital glaze-spraying device according to the embodiments of the present application are known to a person ordinary skilled in the art, and will not be described in detail herein.

In the description of this specification, the reference terms "embodiment", "example", and the like means that the specific features, structures, materials, or characteristics described in connection with the embodiment or example are included in at least one embodiment or example of the present application. In this description, schematic representations of the above terms do not necessarily refer to the same embodiments or examples. Furthermore, the specific features, structures, materials, or features described may be combined in an appropriate manner in any one or more embodiments or examples.

Although embodiments of the present application have been shown and described, a person ordinary skilled in the art may understand that a variety of changes, modifications, substitutions, and variations may be made to these embodiments as long as the embodiments resulting from these changes, modifications, substitutions and variations fall under the scope of the appended claims.

### List of reference signs

- 1: digital glaze-printing module
- 11: long-strip glaze pipe
- 111: glaze inlet
- 112: glaze-printing port
- 113: glaze outlet
- 12: quick-connect pipe assembly
- 121: upper quick-connect pipe
- 122: lower quick-connect pipe
- 13: glaze-spraying spray-head assembly
- 131: valve spray-head unit
- 132: valve nozzle
- 133: protruding ring
- 14: spray-head mounting assembly
- 141: mounting plate
- 142: mounting base
- 143: adjustment mounting part
- 144: pressing block
- 145: positioning ring
- 15: first mounting rack
- 16: second mounting rack
- 2: glaze supply module
- 21: glaze barrel
- 22: glaze supply pump
- 23: glaze box assembly
- 231: first glaze box
- 232: second glaze box
- 24: gas compressor
- 25: pressure regulating valve
- 26: circulating pump
- 27: buffer tank
- 28: filter
- 2321: stirring motor
- 2322: rotary seal bearing
- 2323: liquid level gauge
- 2324: stirring shaft
- 2325: stirring blade

## Claims

1. A ceramic digital glaze-spraying device, comprising a digital glaze-printing module (1) and a glaze supply module (2), wherein the digital glaze-printing module (1) is communicated with the glaze supply module (2), wherein,
the digital glaze-printing module (1) comprises a long-strip glaze pipe (11), a quick-connect pipe assembly (12) and a plurality of glaze-spraying spray-head assemblies (13), the long-strip glaze pipe (11) is provided with a glaze inlet (111) and a glaze-printing port (112), the glaze inlet (111) is communicated with the glaze-printing port (112) through a glaze cavity arranged in the long-strip glaze pipe (11), the glaze-printing port (112) of the long-strip glaze pipe (11) is communicated with each of the glaze-spraying spray-head assemblies (13) one by one through the quick-connect pipe assembly (12) to form a plurality of mutually independent glaze-spraying paths;
each glaze-spraying spray-head assembly (13) comprises a valve spray-head unit (131) and a valve nozzle (132), an input end of the valve spray-head unit (131) is connected to the quick-connect pipe assembly (12), and an output end of the valve spray-head unit (131) is connected to the valve nozzle (132), and the valve spray-head unit (131) is configured to control the on-off of the glaze-spraying path corresponding to the glaze-spraying spray-head assembly (13);
**characterized in that**
the glaze supply module (2) comprises a glaze barrel (21), a glaze supply pump (22), a glaze box assembly (23), an air compressor (24) and a pressure regulating valve (25), and the glaze box assembly (23) comprises a first glaze box (231);
the glaze barrel (21) is communicated with a glaze input port of the first glaze box (231) through the glaze supply pump (22), and a glaze output port of the first glaze box (231) is communicated with the glaze cavity arranged in the long-strip glaze pipe (11) through the glaze inlet (111), and the glaze barrel (21), the glaze supply pump (22), the first glaze box (231) and the glaze inlet (111) of the long-strip glaze pipe (11) are sequentially connected to form a glaze supply path;
the air compressor (24), the pressure regulating valve (25) and a positive pressure air inlet of the first glaze box (231) are sequentially communicated.

2. The ceramic digital glaze-spraying device of claim 1, wherein the long-strip glaze pipe (11) is further provided with a glaze outlet (113), the glaze outlet (113) is communicated with the glaze inlet (111) through the glaze cavity arranged in the long-strip glaze pipe (11);
the glaze supply module (2) further comprises a circulating pump (26), and the glaze box assembly (23) further comprises a second glaze box (232);
the glaze outlet (113) of the long-strip glaze pipe (11) is communicated with a glaze input port of the second glaze box (232), a glaze output port of the second glaze box (232) is communicated with an input port of the circulating pump (26), and an output port of the circulating pump (26) is communicated with the glaze input port of the first glaze box (231);
the glaze outlet (113) of the long-strip glaze pipe (11), the second glaze box (232), the circulating pump (26) and the glaze input port of the first glaze box (231) are sequentially connected to form a large circulation glaze path.

3. The ceramic digital glaze-spraying device of claim 2, wherein the glaze supply module (2) further comprises a filter (28), an input port of the filter (28) is respectively connected to the output port of the glaze supply pump (22) and the output port of the circulating pump (26), and an output port of the filter (28) is connected to the glaze input port of the first glaze box (231).

4. The ceramic digital glaze-spraying device of claim 3, wherein the glaze supply module (2) further comprises a buffer tank (27), and the air compressor (24), the buffer tank (27), the pressure regulating valve (25) and the positive pressure air inlet of the first glaze box (231) are sequentially connected to form a gas path.

5. The ceramic digital glaze-spraying device of claim 2, wherein the glaze supply module (2) is arranged above the digital glaze-printing module (1);
the glaze inlet (111) and the glaze outlet (113) are respectively arranged at both ends of the long-strip glaze pipe (11);
the glaze-printing port (112) is formed on the lower surface of the long-strip glaze pipe (11), and the glaze-spraying spray-head assembly (13) is arranged under the long-strip glaze pipe (11).

6. The ceramic digital glaze-spraying device of claim 1, wherein the quick-connect pipe assembly (12) comprises a plurality of upper quick-connect pipes (121), a plurality of lower quick-connect pipes (122) and a plurality of connecting pipelines, the upper quick-connect pipe (121) and the lower quick-connect pipe (122) are in one-to-one correspondence, and the upper quick-connect pipe (121) is communicated with the corresponding lower quick-connect pipe (122) through the corresponding connecting pipeline;
the long-strip glaze pipe (11) is provided with a plurality of glaze-printing ports (112), the glaze-printing port (112) and the upper quick-connect pipe (121) are in one-to-one correspondence, and the upper quick-connect pipe (121) is connected to the corresponding glaze-printing port (112);
the valve spray-head unit (131) and the lower quick-connect pipe (122) are in one-to-one correspondence, and the lower quick-connect pipe (122) is connected to the corresponding valve spray-head unit (131).

7. The ceramic digital glaze-spraying device of claim 1, wherein the digital glaze-printing module (1) further comprises a spay-head mounting assembly (14), a first mounting rack (15) and a second mounting rack (16), the spay-head mounting assembly (14) comprises a mounting plate (141), wherein the first and second mounting racks are both arranged perpendicular to the mounting plate (141), and the lower end of the first mounting rack (15) is connected to the left end of the upper surface of the mounting plate (141), the lower end of the second mounting rack (16) is connected to the right end of the upper surface of the mounting plate (141), the left end of the long-strip glaze pipe (11) is connected to the upper end of the first mounting rack (15), and the right end of the long-strip glaze pipe (11) is connected to the upper end of the first mounting rack (15);
the mounting plate (141), the first mounting rack (15), the second mounting rack (16) and the long-strip glaze pipe (11) enclose a mounting inner cavity, and the glaze-spraying spay-head assemblies are arranged in the mounting inner cavity.

8. The ceramic digital glaze-spraying device of claim 7, wherein the spay-head mounting assembly (14) further comprises a mounting base (142) and an adjustment mounting part (143), the glaze-spraying spay-head assembly pass through the upper surface of the mounting base (142) in a direction from the upper surface of the mounting base (142) to the lower surface of the mounting base (142), and the glaze-spraying spay-head assembly is fixed to the mounting base (142), and the mounting base (142) is fixed to the mounting plate (141) through the adjustment mounting part (143).

9. The ceramic digital glaze-spraying device of claim 8, wherein the glaze-spraying spay-head assembly further comprises a protruding ring (133) fixed to the outer wall of the valve spray-head unit (131), and the protruding ring (133) is located on the upper surface of the mounting base (142) after the glaze-spraying spay-head assembly passing through the mounting base (142);
the spay-head mounting assembly (14) further comprises a pressing block (144), the pressing block (144) is provided with a spay-head passing-through hole, the radius of the spay-head passing-through hole is greater than the radius of the valve spray-head unit (131), and the radius of the spay-head passing-through hole is smaller than the outer diameter of the protruding ring (133);
the pressing block (144) fixes the outer wall of the valve spray-head unit (131) through the spay-head passing-through hole, and the pressing block (144) presses the protruding ring (133) onto the upper surface of the mounting base (142) through a screw.

10. The ceramic digital glaze-spraying device of claim 9, wherein the spay-head mounting assembly (14) further comprises a positioning ring (145), the outer diameter of the positioning ring (145) is greater than the radius of the spay-head passing-through hole;
the positioning ring (145) is sleeved on the outer wall of the valve spray-head unit (131), and the positioning ring (145) is pressed against the upper surface of the pressing block (144).

11. The ceramic digital glaze-spraying device of claim 1, wherein the long-strip glaze pipe (11) is further provided with a glaze outlet (113), the glaze outlet (113) is communicated with the glaze inlet (111) through the glaze cavity arranged in the long-strip glaze pipe (11);
the glaze supply module (2) further comprises a circulating pump (26),
the glaze outlet (113) of the long-strip glaze pipe (11) is communicated with an input port of the circulating pump (26), and an output port of the circulating pump (26) is communicated with the glaze input port of the first glaze box (231);
the glaze outlet (113) of the long-strip glaze pipe (11), the circulating pump (26) and the glaze input port of the first glaze box (231) are sequentially connected to form a large circulation glaze path.

12. The ceramic digital glaze-spraying device of claim 11, wherein the glaze supply module (2) further comprises a filter (28),
an input port of the filter (28) is connected to the glaze output port of the first glaze box (231), and an output port of the filter (28) is connected to the input port of the circulating pump (26);
the glaze output port of the first glaze box (231), the long-strip glaze pipe (11) and the glaze input port of the circulating pump (26) are sequentially connected to form a branch of the large circulation glaze path.

13. The ceramic digital glaze-spraying device of claim 2, wherein the glaze supply module (2) is arranged above the digital glaze-printing module (1);
the glaze inlet (111) and the glaze outlet (113) are respectively arranged at both ends of the long-strip glaze pipe (11);
the glaze-printing ports (112) are formed in the lower surface of the long-strip glaze pipe (11), and the glaze-spraying spay-head assembly is arranged under the long-strip glaze pipe (11).

14. The ceramic digital glaze-spraying device of claim 1, wherein a stirring device is provided in the first glaze box (231),
the stirring device comprises a stirring motor (2321), a rotary seal bearing (2322), a liquid level gauge (2323), a stirring shaft (2324) and a stirring blade (2325);
the stirring motor (2321) is fixed to the rotary seal bearing (2322), the rotary seal bearing (2322) is installed on the top of the first glaze box (231), and the stirring motor (2321) is connected to the stirring shaft (2324) and the stirring blade (2325).

## Patentansprüche

1. Keramische digitale Glasur-Sprühvorrichtung, umfassend ein digitales Glasur-Druckmodul (1) und ein Glasur-Zuleitungsmodul (2), wobei das digitale Glasur-Druckmodul (1) mit dem Glasur-Zuleitungsmodul (2) verbunden ist, wobei
das digitale Glasur-Druckmodul (1) ein langes Glasurrohr (11), eine Schnellkupplungs-Rohrbaugruppe (12) und eine Vielzahl von Glasur-Sprühkopf-Baugruppen (13) umfasst, das lange Glasurrohr (11) mit einem Glasureinlass (111) und einem Glasur-Druckanschluss (112) versehen ist, der Glasureinlass (111) über einen in dem langen Glasurrohr (11) angeordneten Glasurhohlraum mit dem Glasur-Druckanschluss (112) verbunden ist, der Glasur-Druckanschluss (112) des langen Glasurrohrs (11) über die Schnellkupplungs-Rohrbaugruppe (12) nacheinander mit jeder der Glasur-Sprühkopf-Baugruppen (13) verbunden ist, um mehrere voneinander unabhängige Glasur-Sprühwege zu bilden;
jede Glasur-Sprühkopf-Baugruppe (13) umfasst eine Ventil-Sprühkopfeinheit (131) und eine Ventildüse (132), ein Eingangsende der Ventil-Sprühkopfeinheit (131) ist mit der Schnellkupplungs-Rohrbaugruppe (12) verbunden, und ein Ausgangsende der Ventil-Sprühkopfeinheit (131) ist mit der Ventildüse (132) verbunden, und die Ventil-Sprühkopfeinheit (131) ist so konfiguriert, dass sie das Ein- und Ausschalten des Glasursprühweges entsprechend der Glasur-Sprühkopf-Baugruppe (13) steuert;
**dadurch gekennzeichnet, dass** das Glasur-Zuleitungsmodul (2) einen Glasurzylinder (21), eine Glasur-Zuleitungspumpe (22), eine Glasurbox-Baugruppe (23), einen Luftkompressor (24) und ein Druckregelventil (25) umfasst, und die Glasurbox-Baugruppe (23) eine erste Glasurbox (231) umfasst;
der Glasurzylinder (21) über die Glasur-Zuleitungspumpe (22) mit einem Glasureinlassanschluss des ersten Glasurbehälters (231) verbunden ist und ein Glasurauslassanschluss des ersten Glasurbehälters (231) über den Glasureinlass (111) mit dem in dem langen Glasurrohr (11) angeordneten Glasurhohlraum verbunden ist, und der Glasurzylinder (21), die Glasur-Zuleitungspumpe (22), der erste Glasurbehälter (231) und der Glasureinlass (111) des langen Glasurrohrs (11) sind nacheinander verbunden, um einen Glasurzufuhrweg zu bilden;
der Luftkompressor (24), das Druckregelventil (25) und ein Überdrucklufteinlass des ersten Glasurbehälters (231) sind sequenziell miteinander verbunden.

2. Keramische digitale Glasur-Sprühvorrichtung nach Anspruch 1, wobei das lange Glasurrohr (11) ferner mit einem Glasurauslass (113) versehen ist, wobei der Glasurauslass (113) über den im langen Glasurrohr (11) angeordneten Glasurhohlraum mit dem Glasureinlass (111) verbunden ist;
das Glasur-Zuleitungsmodul (2) ferner eine Umwälzpumpe (26) umfasst und die Glasurbox-Baugruppe (23) ferner eine zweite Glasurbox (232) umfasst;
der Glasurauslass (113) des langen Glasurrohrs (11) mit einem Glasureinlassanschluss der zweiten Glasurbox (232) verbunden ist, ein Glasurauslassanschluss der zweiten Glasurbox (232) ist mit einem Einlassanschluss der Umwälzpumpe (26) verbunden, und ein Auslassanschluss der Umwälzpumpe (26) ist mit dem Glasureinlassanschluss der ersten Glasurbox (231) verbunden;
der Glasurauslass (113) des langen Glasurrohrs (11), der zweite Glasurbehälter (232), die Umwälzpumpe (26) und der Glasureinlass der ersten Glasurbox (231) sind nacheinander verbunden, um einen großen Glasurumlaufweg zu bilden.

3. Keramische digitale Glasur-Sprühvorrichtung nach Anspruch 2, wobei das Glasur-Zuleitungsmodul (2) ferner einen Filter (28) umfasst, wobei ein Einlassanschluss des Filters (28) jeweils mit dem Auslassanschluss der Glasur-Zuleitungspumpe (22) und dem Auslassanschluss der Umwälzpumpe (26) verbunden ist und ein Auslass des Filters (28) ist mit dem Glasureinlassanschluss der ersten Glasurbox (231) verbunden.

4. Keramische digitale Glasur-Sprühvorrichtung nach Anspruch 3, wobei das Glasur-Zuleitungsmodul (2) ferner einen Puffertank (27) umfasst und der Luftkompressor (24), der Puffertank (27), das Druckregelventil (25) und der Überdrucklufteinlass der ersten Glasurbox (231) nacheinander verbunden sind, um einen Gasweg zu bilden.

5. Keramische digitale Glasur-Sprühvorrichtung nach Anspruch 2, wobei das Glasur-Zuleitungsmodul (2) über dem digitalen Glasur-Druckmodul (1) angeordnet ist;
der Glasureinlass (111) und der Glasurauslass (113) jeweils an beiden Enden des langen Glasurrohrs (11) angeordnet sind;
der Glasur-Druckanschluss (112) an der Unterseite des langen Glasurrohrs (11) ausgebildet ist und die Glasur-Sprühkopf-Baugruppe (13) unter dem langen Glasurrohr (11) angeordnet ist.

6. Keramische digitale Glasur-Sprühvorrichtung nach Anspruch 1, wobei die Schnellkupplungs-Rohrbaugruppe (12) eine Vielzahl von oberen Schnellverbindungsrohren (121), mehrere untere Schnellverbindungsrohre (122) und mehrere Verbindungsrohre umfasst, wobei das obere Schnellverbindungsrohr (121) und das untere Schnellverbindungsrohr (122) in einer Eins-zu-Eins-Entsprechung stehen und das obere Schnellanschlussrohr (121) über das entsprechende Verbindungsrohr mit dem entsprechenden unteren Schnellverbindungsrohr (122) verbunden ist;
das lange Glasurrohr (11) mit einer Vielzahl von Glasur-Druckanschlüssen (112) versehen ist, wobei der Glasur-Druckanschluss (112) und das obere Schnellverbindungsrohr (121) in einer Eins-zu-Eins-Entsprechung stehen und das obere Schnellverbindungsrohr (121) mit dem entsprechenden Glasur-Druckanschluss (112) verbunden ist;
die Ventil-Sprühkopfeinheit (131) und das untere Schnellverbindungsrohr (122) stehen in einer Eins-zu-Eins-Entsprechung zueinander, und das untere Schnellverbindungsrohr (122) ist mit der entsprechenden Ventil-Sprühkopfeinheit (131) verbunden.

7. Keramische digitale Glasur-Sprühvorrichtung nach Anspruch 1, wobei das digitale Glasur-Druckmodul (1) ferner eine Sprühkopf-Befestigungsbaugruppe (14), ein erstes Befestigungsgestell (15) und ein zweites Befestigungsgestell (16) umfasst, wobei die Sprühkopf-Befestigungsbaugruppe (14) eine Befestigungsplatte (141) umfasst, wobei das erste und das zweite Befestigungsgestell beide senkrecht zur Befestigungsplatte (141) angeordnet sind und das untere Ende des ersten Befestigungsgestells (15) mit dem linken Ende der Oberseite der Befestigungsplatte (141) verbunden ist, das untere Ende des zweiten Befestigungsgestells (16) mit dem rechten Ende der Oberseite der Befestigungsplatte (141) verbunden ist, das linke Ende des langen Glasurrohrs (11) mit dem oberen Ende des ersten Befestigungsgestells (15) verbunden ist und das rechte Ende des langen Glasurrohrs (11) mit dem oberen Ende des ersten Befestigungsgestells (15) verbunden ist;
die Montageplatte (141), das erste Montagegestell (15), das zweite Montagegestell (16) und das lange Glasurrohr (11) umschließen einen inneren Montagehohlraum, und die Glasur-Sprühkopfbaugruppen sind in dem inneren Montagehohlraum angeordnet.

8. Keramische digitale Glasur-Sprühvorrichtung nach Anspruch 7, wobei die Sprühkopf-Befestigungsbaugruppe (14) ferner eine Befestigungsbasis (142) und ein Einstellbefestigungsteil (143) umfasst, wobei die Glasursprüh-Sprühkopfbaugruppe durch die Oberseite der Befestigungsbasis (142) in einer Richtung von der Oberseite der Befestigungsbasis (142) zur Unterseite der Befestigungsbasis (142) hindurchgeht und die Glasur-Sprühkopfbaugruppe an der Befestigungsbasis (142) befestigt ist und die Befestigungsbasis (142) über das Einstellbefestigungsteil (143) an der Befestigungsplatte (141) befestigt ist.

9. Keramische digitale Glasur-Sprühvorrichtung nach Anspruch 8, wobei die Glasursprühkopfbaugruppe ferner einen vorstehenden Ring (133) umfasst, der an der Außenwand der Ventil-Sprühkopfeinheit (131) befestigt ist, und der vorstehende Ring (133) befindet sich auf der Oberseite der Montagebasis (142), nachdem die Glasur-Sprühkopfbaugruppe die Montagebasis (142) durchlaufen hat;
die Sprühkopf-Befestigungsbaugruppe (14) umfasst ferner einen Druckblock (144), der Druckblock (144) ist mit einer Sprühkopf-Durchgangsbohrung versehen, der Radius der Sprühkopf-Durchgangsbohrung ist größer als der Radius der Ventil-Sprühkopfeinheit (131) und der Radius der Sprühkopf-Durchgangsbohrung ist kleiner als der Außendurchmesser des vorstehenden Rings (133);
der Druckblock (144) fixiert die Außenwand der Ventil-Sprühkopfeinheit (131) durch die Sprühkopf-Durchgangsbohrung, und der Druckblock (144) drückt den vorstehenden Ring (133) durch eine Schraube auf die Oberseite der Befestigungsbasis (142).

10. Keramische digitale Glasur-Sprühvorrichtung nach Anspruch 9, wobei die Sprühkopf-Befestigungsbaugruppe (14) ferner einen Positionierungsring (145) umfasst, wobei der Außendurchmesser des Positionierungsrings (145) größer ist als der Radius der Sprühkopf-Durchgangsbohrung;
der Positionierungsring (145) auf die Außenwand der Ventil-Sprühkopfeinheit (131) aufgesteckt ist und der Positionierungsring (145) gegen die Oberseite des Druckblocks (144) gedrückt wird.

11. Keramische digitale Glasur-Sprühvorrichtung nach Anspruch 1, wobei das lange Glasurrohr (11) ferner mit einem Glasurauslass (113) versehen ist, wobei der Glasurauslass (113) über den in dem langen Glasurrohr (11) angeordneten Glasurhohlraum mit dem Glasureinlass (111) in Verbindung steht;
das Glasur-Zuleitungsmodul (2) ferner eine Umwälzpumpe (26) umfasst,
der Glasurauslass (113) des langen Glasurrohrs (11) mit einem Einlass der Umwälzpumpe (26) in Verbindung steht und ein Auslass der Umwälzpumpe (26) mit dem Glasureinlass der ersten Glasurbox (231) in Verbindung steht;
der Glasurauslass (113) des langen Glasurrohrs (11), die Umwälzpumpe (26) und der Glasureingangsanschluss der ersten Glasurbox (231) sind nacheinander verbunden, um einen großen Umwälzglasurweg zu bilden.

12. Keramische digitale Glasur-Sprühvorrichtung nach Anspruch 11, wobei das Glasur-Zuleitungsmodul (2) ferner einen Filter (28) umfasst,
ein Eingangsanschluss des Filters (28) mit dem Glasurausgangsanschluss der ersten Glasurbox (231) verbunden ist und ein Ausgangsanschluss des Filters (28) mit dem Eingangsanschluss der Umwälzpumpe (26) verbunden ist;
der Glasurauslassanschluss der ersten Glasurbox (231), das lange Glasurrohr (11) und der Glasureinlassanschluss der Umwälzpumpe (26) sind nacheinander verbunden, um einen Zweig des großen Zirkulationsglasurpfads zu bilden.

13. Keramische digitale Glasur-Sprühvorrichtung nach Anspruch 2, wobei das Glasur-Zuleitungsmodul (2) über dem digitalen Glasur-Druckmodul (1) angeordnet ist;
der Glasureinlass (111) und der Glasurauslass (113) jeweils an beiden Enden des langen Glasurrohrs (11) angeordnet sind;
der Glasur-Druckanschluss (112) in der Unterseite des langen Glasurrohrs (11) ausgebildet sind und die Glasursprühkopfbaugruppe unter dem langen Glasurrohr (11) angeordnet ist.

14. Keramische digitale Glasur-Sprühvorrichtung nach Anspruch 1, wobei eine Rührvorrichtung in der ersten Glasurbox (231) vorgesehen ist,
die Rührvorrichtung einen Rührmotor (2321), ein Drehdichtungslager (2322), einen Flüssigkeitsstandsmesser (2323), eine Rührwelle (2324) und ein Rührblatt (2325) umfasst;
der Rührmotor (2321) am Drehdichtungslager (2322) befestigt ist, das Drehdichtungslager (2322) auf der Oberseite der ersten Glasurbox (231) installiert ist und der Rührmotor (2321) mit der Rührwelle (2324) und dem Rührblatt (2325) verbunden ist.

## Revendications

1. Dispositif numérique de pulvérisation de glaçure céramique, comprenant un module numérique d'impression de glaçure (1) et un module d'alimentation en glaçure (2), ledit module numérique d'impression de glaçure (1) étant en communication avec ledit module d'alimentation en glaçure (2),
ledit module numérique d'impression de glaçure (1) comprenant un tuyau de glaçure à longue bande (11), un ensemble de tuyaux à raccordement rapide (12) et une pluralité d'ensembles de tête de pulvérisation de glaçure (13), ledit tuyau de glaçure à longue bande (11) étant doté d'une entrée de glaçure (111) et un raccord d'impression de glaçure (112), ladite entrée de glaçure (111) étant en communication avec ledit raccord d'impression de glaçure (112) par une cavité de glaçure disposée dans le tuyau de glaçure à longue bande (11), ledit raccord d'impression de glaçure (112) du tuyau de glaçure à longue bande (11) étant en communication avec chacun des ensembles de tête de pulvérisation de glaçure (13) de façon biunivoque par ledit ensemble de tuyaux à raccordement rapide (12) pour former une pluralité de voies de pulvérisation de glaçure indépendantes l'une de l'autre ;
chaque ensemble de tête de pulvérisation de glaçure (13) comprenant une unité de valve de tête de pulvérisation (131) et une buse de valve (132), une extrémité d'entrée de ladite unité de valve de tête de pulvérisation (131) étant connectée audit ensemble de tuyaux à raccordement rapide (12), et une extrémité de sortie de ladite unité de valve de tête de pulvérisation (131) étant connectée à la buse de valve (132), et ladite unité de valve de tête de pulvérisation (131) étant configurée pour commander une activation/désactivation de la voie de pulvérisation de glaçure qui correspond audit ensemble de tête de pulvérisation de glaçure (13) ;
**caractérisé en ce que**
le module d'alimentation en glaçure (2) comprend un baril de glaçure (21), une pompe d'alimentation en glaçure (22), un ensemble de boîte de glaçure (23), un compresseur d'air (24) et une valve de régulation de pression (25), et ledit ensemble de boîte de glaçure (23) comprend une première boîte de glaçure (231) ;
ledit baril de glaçure (21) étant en communication avec un raccord d'entrée de glaçure de la première boîte de glaçure (231) par la pompe d'alimentation en glaçure (22), et un raccord de sortie de glaçure de la première boîte de glaçure (231) étant en communication avec la cavité de glaçure disposée dans le tuyau de glaçure à longue bande (11) par ladite entrée de glaçure (111), et le baril de glaçure (21), la pompe d'alimentation en glaçure (22), la première boîte de glaçure (231) et ladite entrée de glaçure (111) du tuyau de glaçure à longue bande (11) étant connectés de façon séquentielle pour former une voie d'alimentation en glaçure ;
le compresseur d'air (24), la valve de régulation de pression (25) et une entrée d'air à pression positive de la première boîte de glaçure (231) étant en communication de façon séquentielle.

2. Dispositif numérique de pulvérisation de glaçure céramique selon la revendication 1, dans lequel le tuyau de glaçure à longue bande (11) est en outre doté d'une sortie de glaçure (113), ladite sortie de glaçure (113) étant en communication avec ladite entrée de glaçure (111) par la cavité de glaçure disposée dans le tuyau de glaçure à longue bande (11) ;
ledit module d'alimentation en glaçure (2) comprenant en outre une pompe de circulation (26), et ledit ensemble de boîte de glaçure (23) comprenant en outre une deuxième boîte de glaçure (232) ;
la sortie de glaçure (113) du tuyau de glaçure à longue bande (11) étant en communication avec un raccord d'entrée de glaçure de la deuxième boîte de glaçure (232), un raccord de sortie de glaçure de la deuxième boîte de glaçure (232) étant en communication avec un raccord d'entrée de la pompe de circulation (26), et un raccord de sortie de la pompe de circulation (26) étant en communication avec le raccord d'entrée de glaçure de la première boîte de glaçure (231) ;
la sortie de glaçure (113) du tuyau de glaçure à longue bande (11), la deuxième boîte de glaçure (232), la pompe de circulation (26) et raccord d'entrée de glaçure de la première boîte de glaçure (231) étant connectés de façon séquentielle pour former un grand circuit de circulation de glaçure.

3. Dispositif numérique de pulvérisation de glaçure céramique selon la revendication 2, dans lequel le module d'alimentation en glaçure (2) comprend en outre un filtre (28), un raccord d'entrée du filtre (28) étant respectivement connecté au raccord de sortie de la pompe d'alimentation en glaçure (22) et au raccord de sortie de la pompe de circulation (26), et un raccord de sortie du filtre (28) étant connecté au raccord d'entrée de glaçure de la première boîte de glaçure (231).

4. Dispositif numérique de pulvérisation de glaçure céramique selon la revendication 3, dans lequel le module d'alimentation en glaçure (2) comprend en outre un réservoir tampon (27), et ledit compresseur d'air (24), ledit réservoir tampon (27), ladite valve de régulation de pression (25) et ladite entrée d'air à pression positive de la première boîte de glaçure (231) sont connectés de façon séquentielle pour former une voie à gaz.

5. Dispositif numérique de pulvérisation de glaçure céramique selon la revendication 2, dans lequel le module d'alimentation en glaçure (2) est disposé au-dessus du module numérique d'impression de glaçure (1) ;
ladite entrée de glaçure (111) et ladite sortie de glaçure (113) sont respectivement disposées aux deux extrémités du tuyau de glaçure à longue bande (11) ;
ledit raccord d'impression de glaçure (112) est formé sur la surface inférieure du tuyau de glaçure à longue bande (11), et ledit ensemble de tête de pulvérisation de glaçure (13) est disposé au-dessous du tuyau de glaçure à longue bande (11).

6. Dispositif numérique de pulvérisation de glaçure céramique selon la revendication 1, dans lequel ledit ensemble de tuyaux à raccordement rapide (12) comprend une pluralité de tuyaux à raccordement rapide supérieurs (121), une pluralité de tuyaux à raccordement rapide inférieurs (122) et une pluralité de conduits de connexion, les tuyaux à raccordement rapide supérieurs (121) et les tuyaux à raccordement rapide inférieurs (122) étant en correspondance biunivoque, et le tuyau à raccordement rapide supérieur (121) étant en communication avec le tuyau à raccordement rapide inférieur correspondant (122) par le conduit de connexion correspondant ;
le tuyau de glaçure à longue bande (11) étant doté d'une pluralité de raccords d'impression de glaçure (112), les raccords d'impression de glaçure (112) et les tuyaux à raccordement rapide supérieurs (121) étant en correspondance biunivoque, et le tuyau à raccordement rapide supérieur (121) étant connecté au raccord d'impression de glaçure correspondant (112) ;
les unités de valve de tête de pulvérisation (131) et les tuyaux à raccordement rapide inférieur (122) étant en correspondance biunivoque, et le tuyau à raccordement rapide inférieur (122) étant connecté à l'unité de valve de tête de pulvérisation correspondante (131).

7. Dispositif numérique de pulvérisation de glaçure céramique selon la revendication 1, dans lequel ledit module numérique d'impression de glaçure (1) comprend en outre un ensemble de montage de têtes de pulvérisation (14), un premier cadre de montage (15) et un deuxième cadre de montage (16), ledit ensemble de montage de têtes de pulvérisation (14) comprenant une plaque de montage (141), lesdits premier et deuxième cadres de montage étant disposés perpendiculairement à la plaque de montage (141), et l'extrémité inférieure du premier cadre de montage (15) étant connectée à l'extrémité gauche de la surface supérieure de la plaque de montage (141), l'extrémité inférieure du deuxième cadre de montage (16) étant connectée à l'extrémité droite de la surface supérieure de la plaque de montage (141), l'extrémité gauche du tuyau de glaçure à longue bande (11) étant connectée à l'extrémité supérieure du premier cadre de montage (15), et l'extrémité droite du tuyau de glaçure à longue bande (11) étant connectée à l'extrémité supérieure du premier cadre de montage (15) ;
la plaque de montage (141), le premier cadre de montage (15), le deuxième cadre de montage (16) et le tuyau de glaçure à longue bande (11) entourant une cavité intérieure de montage, et les ensembles de tête de pulvérisation de glaçure étant disposés dans ladite cavité intérieure de montage.

8. Dispositif numérique de pulvérisation de glaçure céramique selon la revendication 7, dans lequel ledit ensemble de montage de têtes de pulvérisation (14) comprend en outre une base de montage (142) et une partie d'ajustement de montage (143), ledit ensemble de tête de pulvérisation de glaçure traversant la surface supérieure de la base de montage (142) dans une direction depuis la surface supérieure de la base de montage (142) vers la surface inférieure de la base de montage (142), et ledit ensemble de tête de pulvérisation de glaçure étant fixé à la base de montage (142), et la base de montage (142) étant fixée à la plaque de montage (141) moyennant ladite partie d'ajustement de montage (143).

9. Dispositif numérique de pulvérisation de glaçure céramique selon la revendication 8, dans lequel ledit ensemble de tête de pulvérisation de glaçure comprend en outre une bague faisant saillie (133) fixé sur la paroi extérieure de ladite unité de valve de tête de pulvérisation (131), et ladite bague faisant saillie (133) étant située sur la surface supérieure de la base de montage (142) après que ledit ensemble de tête de pulvérisation de glaçure est fait passer à travers la base de montage (142) ;
ledit ensemble de montage de têtes de pulvérisation (14) comprenant en outre un bloc de pressage (144), ledit bloc de pressage (144) étant doté d'un trou de passage de tête de pulvérisation, le rayon dudit trou de passage de tête de pulvérisation étant supérieur au rayon de ladite unité de valve de tête de pulvérisation (131), et le rayon du trou de passage de tête de pulvérisation étant inférieur au diamètre extérieur de la bague faisant saillie (133) ;
ledit bloc de pressage (144) fixant la paroi extérieure de ladite unité de valve de tête de pulvérisation (131) moyennant ledit trou de passage de tête de pulvérisation, et le bloc de pressage (144) pressant la bague faisant saillie (133) sur la surface supérieure de la base de montage (142) moyennant une vis.

10. Dispositif numérique de pulvérisation de glaçure céramique selon la revendication 9, dans lequel ledit ensemble de montage de têtes de pulvérisation (14) comprend en outre une bague de positionnement (145), le diamètre extérieur de ladite bague de positionnement (145) étant supérieur au rayon dudit trou de passage de tête de pulvérisation ;
ladite bague de positionnement (145) étant enfilée sur la paroi extérieure de ladite unité de valve de tête de pulvérisation (131), et ladite bague de positionnement (145) étant pressée contre la surface supérieure du bloc de pressage (144).

11. Dispositif numérique de pulvérisation de glaçure céramique selon la revendication 1, dans lequel ledit tuyau de glaçure à longue bande (11) est en outre doté d'une sortie de glaçure (113), ladite sortie de glaçure (113) étant en communication avec ladite entrée de glaçure (111) par la cavité de glaçure disposée dans le tuyau de glaçure à longue bande (11) ;
ledit module d'alimentation en glaçure (2) comprenant en outre une pompe de circulation (26),
ladite sortie de glaçure (113) du tuyau de glaçure à longue bande (11) étant en communication avec un raccord d'entrée de la pompe de circulation (26), et un raccord de sortie de la pompe de circulation (26) étant en communication avec le raccord d'entrée de glaçure de la première boîte de glaçure (231) ;
ladite sortie de glaçure (113) du tuyau de glaçure à longue bande (11), la pompe de circulation (26) et le raccord d'entrée de glaçure de la première boîte de glaçure (231) étant connectés de façon séquentielle pour former un grand circuit de circulation de glaçure.

12. Dispositif numérique de pulvérisation de glaçure céramique selon la revendication 11, dans lequel ledit module d'alimentation en glaçure (2) comprend en outre un filtre (28),
le raccord d'entrée du filtre (28) étant connecté au raccord de sortie de glaçure de la première boîte de glaçure (231), et le raccord de sortie du filtre (28) étant connecté au raccord d'entrée de la pompe de circulation (26) ;
le raccord de sortie de glaçure de la première boîte de glaçure (231), le tuyau de glaçure à longue bande (11) et le raccord d'entrée de glaçure de la pompe de circulation (26) étant connectés de façon séquentielle pour former un branchement du grand circuit de circulation de glaçure.

13. Dispositif numérique de pulvérisation de glaçure céramique selon la revendication 2, dans lequel ledit module d'alimentation en glaçure (2) est disposé au-dessus du module numérique d'impression de glaçure (1) ;
ladite entrée de glaçure (111) et ladite sortie de glaçure (113) étant respectivement disposées aux deux extrémités du tuyau de glaçure à longue bande (11) ;
les raccords d'impression de glaçure (112) étant formés dans la surface inférieure du tuyau de glaçure à longue bande (11), et ledit ensemble de tête de pulvérisation de glaçure étant disposé au-dessous du tuyau de glaçure à longue bande (11).

14. Dispositif numérique de pulvérisation de glaçure céramique selon la revendication 1, dans lequel un dispositif d'agitation est prévu dans la première boîte de glaçure (231),
ledit dispositif d'agitation comprenant un moteur d'agitation (2321), un palier de rotation étanche (2322), un indicateur de niveau de liquide (2323), un arbre d'agitation (2324) et une pale d'agitation (2325) ;
ledit moteur d'agitation (2321) étant fixé audit palier de rotation étanche (2322), le palier de rotation étanche (2322) étant installé sur la partie supérieure de la première boîte de glaçure (231), et le moteur d'agitation (2321) étant connecté audit arbre d'agitation(2324) et à ladite pale d'agitation (2325).
